# EUROPÄISCHE PATENTSCHRIFT

(11) **EP 2 620 058 B1**
(45) Veröffentlichungstag und Bekanntmachung des Hinweises auf die Patenterteilung: **12.09.2018**
(21) Anmeldenummer: 13000130.8
(22) Anmeldetag: 19.01.2013
(51) Int. Cl.: A23G 1/00

(54) **Verfahren zum Herstellen von Fettmassen**
Method for manufacturing masses of fat
Procédé de fabrication de masses graisseuses

(30) Priorität: 26.01.2012 DE 102012001417
(43) Veröffentlichungstag der Anmeldung: 31.07.2013
(73) Patentinhaber: NETZSCH-Feinmahltechnik GmbH, 95100 Selb (DE)
(72) Erfinder: Makrakis, Dimitrios, 95032 Hof (DE); Harbs, Theron, Pomerode/SC (BR); Schmidt, Michael, 95100 Selb (DE); Zettl, Horst, 95100 Selb (DE)
(74) Vertreter: Benninger, Johannes

(56) Entgegenhaltungen:
- EP-A1- 2 106 845
- EP-A2- 0 442 544
- EP-A2- 0 796 563
- WO-A1-2005/077197
- DE-A1- 3 202 929
- US-A- 3 628 965
- US-A- 4 224 354

## Beschreibung

Die vorliegende Erfindung betrifft ein Verfahren für die Herstellung von auf Fettmassen basierenden Genussmitteln.

Die Patentanmeldung WO 2005/077197 A1 offenbart ein Verfahren zum Herstellen von Schokolade, bei welchem alle Rohstoffe wie z.B. Schokonibs und Kristallzucker einer Vorzerkleinerung unterzogen werden. Anschließend werden die vermahlenen Rohstoffe in eine U-förmigen Conchiereinrichtung gegeben und weiterbehandelt. Abschließend wird die hergestellte Schokoladenmasse mittels einer Rührwerkskugelmühle feinstvermahlen. Das Verfahren sieht die folgenden Schritte vor:
- aufgeben der Rohstoffe in eine Vorrichtung;
- mischen der Rohstoffe in der Vorrichtung sowie einstellen der benötigten Verarbeitungstemperatur und -konsistenz;
- trockenconchieren der Rohstoffe in der Vorrichtung;
- verflüssigen der gemischten Rohstoffe in der Vorrichtung durch Zugabe von mindestens einem Fett und/oder mindestens einem Öl;
- feinvermahlen der entstandenen Fettmasse durch Kreislauffahrweise zwischen der Vorrichtung und einem Mahlaggregat.

Die Fettmasse wird mit einer Pumpe im Kreislauf zwischen der Vorrichtung und dem Mahlaggregat gefördert.

Durch US 3,628,965 ist ein Verfahren zum Herstellen von auf Fettmassen basierenden Genussmitteln bekannt. Das Verfahren sieht die folgenden Schritte vor:
- aufgeben der Rohstoffe in eine Vorrichtung;
- mischen der Rohstoffe in der Vorrichtung sowie einstellen der benötigten Verarbeitungstemperatur und -konsistenz;
- verflüssigen der gemischten Rohstoffe in der Vorrichtung durch Zugabe von mindestens einem Fett und/oder mindestens einem Öl;
- feinvermahlen der entstandenen Fettmasse durch Kreislauffahrweise zwischen der Vorrichtung und einem Mahlaggregat.

Nach der Verflüssigung der gemischten Rohstoffe können ein oder mehrere Zusätze zugegeben werden.

Durch US 4,224,354 ist ein Verfahren zum Herstellen von auf Fettmassen basierenden Genussmitteln bekannt. Das Verfahren sieht die folgenden Schritte vor:
- aufgeben der Rohstoffe in eine Vorrichtung;
- mischen der Rohstoffe in der Vorrichtung sowie einstellen der benötigten Verarbeitungstemperatur und -konsistenz;
- verflüssigen der gemischten Rohstoffe in der Vorrichtung durch Zugabe von mindestens einem Fett und/oder mindestens einem Öl;
- feinvermahlen der entstandenen Fettmasse durch Kreislauffahrweise zwischen der Vorrichtung und einem Mahlaggregat.

Nach der Verflüssigung der gemischten Rohstoffe können ein oder mehrere Zusätze zugegeben werden. Die Fettmasse wird mit einer Pumpe im Kreislauf zwischen der Vorrichtung und dem Mahlaggregat gefördert.

Durch DE 32 02 929 A1 ist ein Verfahren zum Herstellen von auf Fettmassen basierenden Genussmitteln bekannt. Das Verfahren sieht die folgenden Schritte vor:
- aufgeben der Rohstoffe in eine Vorrichtung;
- mischen der Rohstoffe in der Vorrichtung sowie einstellen der benötigten Verarbeitungstemperatur und -konsistenz;
- verflüssigen der gemischten Rohstoffe in der Vorrichtung durch Zugabe von mindestens einem Fett und/oder mindestens einem Öl;
- feinvermahlen der entstandenen Fettmasse durch Kreislauffahrweise zwischen der Vorrichtung und einem Mahlaggregat.

Abluft aus der Vorrichtung wird über eine Absaugung beschleunigt abgeleitet. Die Fettmasse wird mit einer Pumpe im Kreislauf zwischen der Vorrichtung und dem Mahlaggregat gefördert.

Durch EP 0 796 563 A2 ist ein Verfahren zum Herstellen von auf Fettmassen basierenden Genussmitteln bekannt. Das Verfahren sieht die folgenden Schritte vor:
- aufgeben der Rohstoffe in eine Vorrichtung;
- mischen der Rohstoffe in der Vorrichtung sowie einstellen der benötigten Verarbeitungstemperatur und -konsistenz;
- verflüssigen der gemischten Rohstoffe in der Vorrichtung durch Zugabe von mindestens einem Fett und/oder mindestens einem Öl;
- feinvermahlen der entstandenen Fettmasse durch Kreislauffahrweise zwischen der Vorrichtung und einem Mahlaggregat.

Abluft aus der Vorrichtung wird über eine Absaugung beschleunigt abgeleitet.

Durch EP 2 106 845 A1 ist ein Verfahren zum Herstellen von auf Fettmassen basierenden Genussmitteln bekannt. Das Verfahren sieht die folgenden Schritte vor:
- aufgeben der Rohstoffe in eine Vorrichtung;
- mischen der Rohstoffe in der Vorrichtung sowie einstellen der benötigten Verarbeitungstemperatur und -konsistenz;
- verflüssigen der gemischten Rohstoffe in der Vorrichtung durch Zugabe von mindestens einem Fett und/oder mindestens einem Öl;
- feinvermahlen der entstandenen Fettmasse durch Kreislauffahrweise zwischen der Vorrichtung und einem Mahlaggregat.

Die Fettmasse wird mit einer Pumpe im Kreislauf zwischen der Vorrichtung und dem Mahlaggregat gefördert.

Durch EP 0 442 544 A2 ist ein Verfahren zum Herstellen von auf Fettmassen basierenden Genussmitteln bekannt. Das Verfahren sieht die folgenden Schritte vor:
- aufgeben der Rohstoffe in eine Vorrichtung;
- mischen der Rohstoffe in der Vorrichtung sowie einstellen der benötigten Verarbeitungstemperatur und -konsistenz;
- verflüssigen der gemischten Rohstoffe in der Vorrichtung durch Zugabe von mindestens einem Fett und/oder mindestens einem Öl;
- feinvermahlen der entstandenen Fettmasse durch Kreislauffahrweise zwischen der Vorrichtung und einem Mahlaggregat.

Die Fettmasse wird mit einer Pumpe im Kreislauf zwischen der Vorrichtung und dem Mahlaggregat gefördert.

Herkömmliche Verfahren zur Herstellung von auf Fettmasse basierenden Genussmitteln, insbesondere Verfahren zur Herstellung von Schokolade, sind sehr energieaufwendig und benötigen viel Raum für die Aufstellung der Maschinen. Vor allem die Aufbereitung der Rohstoffe, die in die Verarbeitungsmaschinen eingebracht werden, ist bei herkömmlichen Verfahren sehr aufwendig und energiehungrig.

Somit liegt der Erfindung die Aufgabe zugrunde, ein Verfahren zu schaffen, mit welchem auf Fettmassen basierende Genussmittel effizient, energie- und ressourcenschonend hergestellt werden können.

Die erfindungsgemäße Aufgabe wird durch ein Verfahren gelöst, das die Merkmale des Anspruchs 1 umfasst. Weitere vorteilhafte Ausgestaltungen sind den Merkmalen der Unteransprüche zu entnehmen.

Es wird ein Verfahren zum Herstellen von auf Fettmassen basierenden Genussmitteln beschrieben. Zur Herstellung der Fettmasse werden als erstes die Rohstoffe in eine Vorrichtung aufgegeben. Die Rohstoffe sind unter anderem Schokonibs, Kakaomasse, Kakaoblöcke oder Kakaodrops und Kristallzucker. Diese werden ohne vorherige Vermahlung direkt in der Vorrichtung gemischt und die benötigte Verarbeitungstemperatur und -konsistenz wird eingestellt. Anschließend werden die gemischten Rohstoffe in der Vorrichtung durch Zugabe von mindestens einem Fett und/oder mindestens einem Öl verflüssigt. Abschließend wird die entstandene Fettmasse durch Kreislauffahrweise zwischen der Vorrichtung und einem Mahlaggregat feinstvermahlen. In einer bevorzugten Ausführungsform verfügt das Mahlaggregat über zwei Mahlbereiche. Im ersten Mahlbereich werden die groben Bestandteile vorzerkleinert, im anschließenden Hauptmahlbereich werden die vorgemahlenen Bestandteile dann feinstvermahlen.

Ein zweites Verfahren bezieht sich speziell auf die Herstellung von Schokolade, welche ebenfalls ein auf Fettmassen basierendes Genussmittel darstellt. Zur Herstellung der Schokolade werden als erstes die Rohstoffe in eine Vorrichtung aufgegeben. Diese Rohstoffe werden in der Vorrichtung gemischt und die benötigte Verarbeitungstemperatur und -konsistenz wird eingestellt. In einem Zwischenschritt werden die Rohstoffe in der Vorrichtung trockenconchiert. Durch diesen Zwischenschritt, der mehrere Stunden dauern kann, werden unerwünschte Bestandteile, wie zum Beispiel unerwünschte Geschmacksstoffe, aus der Rohfettmasse ausgetrieben. Hierbei wird allgemein von einer Entsäuerung der Rohfettmasse gesprochen. Der Vorgang des Conchierens ist in der Schokoladenherstellung ausreichend bekannt und wird hier somit auch nicht näher beschrieben. Der Einsatz dieses Zwischenschrittes in der Vorrichtung, noch vor dem Verflüssigen ist jedoch neu und verbessert die Energieausnutzung der Vorrichtung und die Effizienz des Verfahrens deutlich. Anschließend werden die gemischten Rohstoffe in der Vorrichtung durch Zugabe von mindestens einem Fett und/oder mindestens einem Öl verflüssigt. Abschließend wird die entstandene Fettmasse durch die Kreislauffahrweise zwischen der Vorrichtung und einem Mahlaggregat feinstvermahlen.

Nach der Verflüssigung der gemischten Rohstoffe werden der Fettmasse eine oder mehrere Zusätze zugegeben. Diese Zusätze können zum Beispiel Nüsse, Keksbruch und ähnliche Dinge sein. Diese Zusätze sind für einen entsprechenden Geschmack oder eine bestimmte Konsistenz ausschlaggebend. Es besteht bei dem erfindungsgemäßen Verfahren die Möglichkeit diese Zusätzen vor, während oder nach der Feinstvermahlung aufzugeben.

Die Fettmasse wird in dem Mahlaggregat in zwei Stufen vermahlen. Erst strömt die Fettmasse durch eine Vorzerkleinerung des Mahlaggregates und anschließend wird sie im Hauptmahlraum des Mahlaggregates feingemahlen. Für die Vorzerkleinerung und für die Feinvermahlung kann jeweils eine separate Maschine verwendet werden, wobei beide Maschinen nach der Vorrichtung angeordnet sind. Es ist jedoch auch möglich, wie vorab in der bevorzugten Ausführungsform beschrieben, beide Mahlverfahren in einer einzigen Maschine durchzuführen.

Die im erfindungsgemäßen Verfahren benötigte Luft, zum Austragen von unerwünschten Geschmacksstoffen und zur Temperierung der Fettmasse, wird über eine Mischwelle in die Fettmasse eingebracht. Zusätzlich zum Austrag der unerwünschten Geschmacksstoffe findet eine Entsäuerung der Fettmasse statt. Beim Temperieren der Fettmasse, besonders bei Schokolade, wird eine vorgegebene Temperaturkurve gefahren. Durch diesen speziellen Temperaturverlauf bilden sich in der Fettmasse, speziell in der Kakaobutter, Beta-V Kristalle. Diese Beta-V Kristalle stellen eine dichte Kakaobutter-Kristallstruktur dar und verhindern die Migration von Fremdfetten. Die Abluft aus der Vorrichtung wird über eine Absaugung beschleunigt abgeleitet.

Die Fettmasse wird mit einer Pumpe im Kreislauf zwischen der Vorrichtung und dem Mahlaggregat gefördert. Diese Kreislauffahrweise wird so lange aufrechterhalten, bis die Fettmasse oder im speziellen die Schokolade die gewünschte Feinheit besitzt. Weiterhin wird die Fettmasse während des Pumpens temperiert. Dieses Temperieren kann entweder ein Erwärmen oder Kühlen sein. Das Erwärmen dient dazu, die Fettmasse oder die Schokolade fließfähig zu halten. Das Kühlen hingegen soll verhindern, dass die Fettmasse oder die Schokolade anbrennt oder ihren Geschmack verändert.

In dem Mahlaggregat werden Stahl- und/oder Keramikmahlhilfsmittel eingesetzt. Nach dem Mahlaggregat ist ein Bauteil angeordnet, mit dem möglicher Bruch und/oder Abrieb der Stahl- und/oder Keramikmahlhilfsmittel aus dem Produktionskreislauf entfernt wird. In einer bevorzugten Ausführungsform wird als Mahlaggregat eine Rührwerkskugelmühle eingesetzt. Weiterhin wird als Vorrichtung eine Conche verwendet. Die Vorrichtung und das Mahlaggregat werden mit Stahl oder mit einem keramischen Werkstoff ausgekleidet. Als Pumpe wird eine Verdrängerpumpe, vorzugsweise eine Exzenterschneckenpumpe eingesetzt. Diese Pumpe ist, wie vorab bereits beschrieben, temperierbar.

Weiterhin wird eine Fettmasse offenbart, welche nach dem erfindungsgemäßen Verfahren hergestellt ist. Die Fettmasse ist ein Compound, eine Füllmasse, eine Glasur oder eine Schokolade. Die Fettmasse kann Zusätze wie Nüsse oder Keksbruch enthalten, wobei die Zusätze ganz, als Bruchstücke oder feinvermahlen in der fertigen Fettmasse enthalten sind.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt ein erfindungsgemäßes Verfahren zum Herstellen einer Fettmasse / Schokolade.
Fig. 2 zeigt eine Vorrichtung zur Verwendung im erfindungsgemäßen Verfahren.
Fig. 3 Zeigt ein Mahlaggregat mit zwei Mahlbereichen.

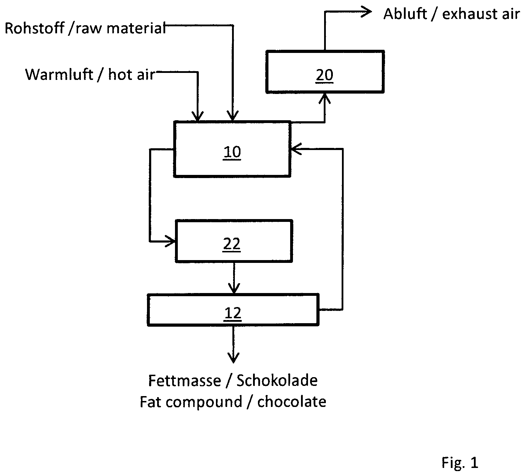

**Fig. 1** zeigt ein erfindungsgemäßes Verfahren zum Herstellen einer Fettmasse / Schokolade. Zur Herstellung der Fettmasse werden als erstes die Rohstoffe in eine Vorrichtung 10 aufgegeben. Diese Rohstoffe werden in der Vorrichtung 10 gemischt und die benötigte Verarbeitungstemperatur und -konsistenz wird eingestellt. Anschließend werden die gemischten Rohstoffe in der Vorrichtung 10 durch Zugabe von Fetten und/oder Ölen verflüssigt. Abschließend wird die entstandene Fettmasse durch eine Kreislauffahrweise zwischen der Vorrichtung 10 und einem Mahlaggregat 12 feinstvermahlen. Für die Kreislauffahrweise wird eine Pumpe 22 eingesetzt. Die Abluft wird über eine Absaugung 20 beschleunigt abgeleitet.

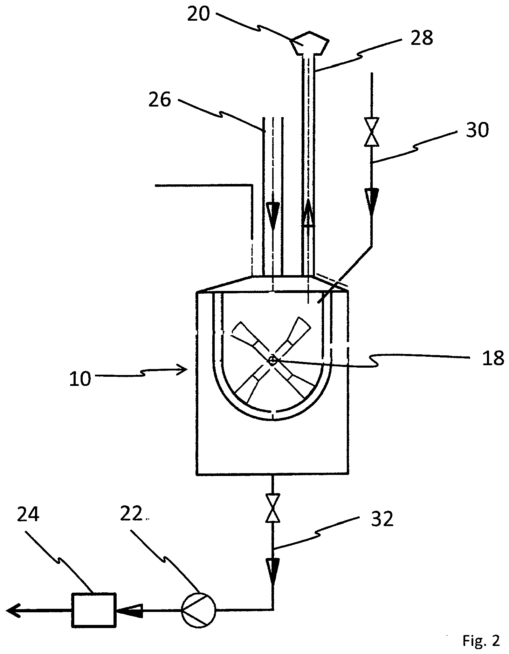

**Fig. 2** zeigt eine Vorrichtung 10 zur Verwendung im erfindungsgemäßen Verfahren. Bei der Vorrichtung 10 werden die Rohstoffe über den Rohstoffeinlass 26 aufgegeben. Die im Verfahren benötigte Warmluft wird über die Mischwelle 18 direkt in die in der Vorrichtung 10 befindliche Fettmasse eingegeben. Über die Abluftleitung 28 und die nachgeschaltete Absaugung 20 wird die Abluft, mit allen ungewollten gasförmigen Bestandteilen, aus der Vorrichtung 10 entfernt. Vor dem Entnehmen der Fettmasse aus der Vorrichtung 10 wird die Fettmasse durch die Zugabe von Fett und/oder Öl über die Fett/Öl-Aufgabe 30 verflüssigt. Nach Einstellung der notwendigen Konsistenz wird die Fettmasse über den Ablauf 30 mittels der Pumpe 22 abgepumpt und der Weiterverarbeitung zugeleitet. Im Anschluss an die Pumpe 22 befindet sich ein Bauteil 24 mit welchem Stahl- und/oder Keramikbruch oder Abrieb aus der Vorrichtung 10 und/oder aus dem Mahlaggregat (nicht dargestellt) aus der fertigen Fettmasse entfernt werden kann.

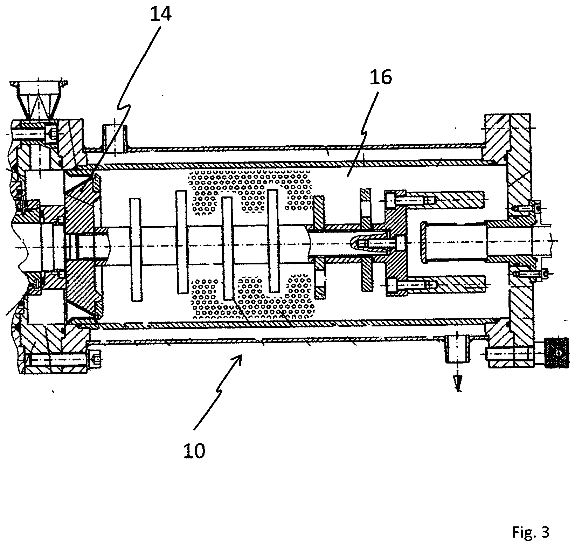

**Fig. 3** Zeigt ein Mahlaggregat 12 mit zwei Mahlbereichen 14 und 16. In der dargestellten Ausführungsform ist das Mahlaggregat 12 eine Rührwerkskugelmühle. Das Mahlaggregat 12 verfügt über zwei Mahlbereiche 14 und 16. Im Vorzerkleinerer 14 werden durch ein spezielles System die Grobbestandteile in der Fettmasse zerkleinert. Die vorzerkleinerte Fettmasse strömt weiter in den Hauptmahlraum 16 und wird hier auf die gewünschte Endfeinheit feinvermahlen. Eine entsprechende Rührwerkskugelmühle ist aus der deutschen Patentanmeldung DE 10 2008 058 585 A1 bekannt.

Die Erfindung wurde unter Bezugnahme auf eine bevorzugte Ausführungsform beschrieben.

### Bezugszeichen

- 10: Vorrichtung
- 12: Mahlaggregat
- 14: Vorzerkleinerer
- 16: Hauptmahlraum
- 18: Mischwelle
- 20: Absaugung
- 22: Pumpe
- 24: Bauteil
- 26: Rohstoffaufgabe
- 28: Abluftleitung
- 30: Fett / Öl-Aufgabe
- 32: Ablauf

## Patentansprüche

1. Verfahren zum Herstellen von auf Fettmassen basierenden Genussmitteln, umfassend die folgenden Schritte:
a. aufgeben der Rohstoffe in eine Vorrichtung (10);
b. mischen der Rohstoffe in der Vorrichtung (10) sowie einstellen der benötigten Verarbeitungstemperatur und -konsistenz;
c. verflüssigen der gemischten Rohstoffe in der Vorrichtung (10) durch Zugabe von mindestens einem Fett und/oder mindestens einem Öl;
d. feinvermahlen der entstandenen Fettmasse durch Kreislauffahrweise zwischen der Vorrichtung (10) und einem Mahlaggregat (12),
wobei:
• nach der Verflüssigung der gemischten Rohstoffe ein oder mehrere Zusätze zugegeben werden,
• die im Verfahren benötigte Luft über eine Mischwelle (18) in die Fettmasse eingebracht wird,
• Abluft aus der Vorrichtung (10) über eine Absaugung (20) beschleunigt abgeleitet wird,
• die Fettmasse mit einer Pumpe (22) im Kreislauf zwischen der Vorrichtung (10) und dem Mahlaggregat (12) gefördert wird, und
• mit der Pumpe (22) die Fettmasse beim Pumpen temperiert wird.

2. Verfahren nach Anspruch 1, wobei die Rohstoffe in einem Zwischenschritt noch vor dem Verflüssigen in der Vorrichtung trockenconchiert werden.

3. Verfahren nach einem der Ansprüche 1 oder 2, **dadurch gekennzeichnet, dass** die Fettmasse in dem Mahlaggregat (12) in zwei Stufen vermahlen wird.

4. Verfahren nach Anspruch 3, **dadurch gekennzeichnet, dass** die Fettmasse erst durch eine Vorzerkleinerung (14) des Mahlaggregates (12) strömt und anschließend im Hauptmahlraum (16) des Mahlaggregates (12) feingemahlen wird.

5. Verfahren nach Anspruch 4, **dadurch gekennzeichnet, dass** für die Vorzerkleinerung und für die Feinvermahlung jeweils eine separate Maschine verwendet wird, wobei beide Maschinen nach der Vorrichtung (10) angeordnet werden.

6. Verfahren nach einem der Ansprüche 1 bis 5, **dadurch gekennzeichnet, dass** in dem Mahlaggregat (12) Stahl- und/oder Keramikmahlhilfsmittel eingesetzt werden.

7. Verfahren nach Anspruch 6, **dadurch gekennzeichnet, dass** nach dem Mahlaggregat (12) ein Bauteil (24) angeordnet ist, mit dem möglicher Bruch und/oder Abrieb der Stahl- und/oder Keramikmahlhilfsmittel aus dem Produktionskreislauf entfernt wird.

8. Verfahren nach einem der Ansprüche 1 bis 7, **dadurch gekennzeichnet, dass** als Mahlaggregat (12) eine Rührwerkskugelmühle eingesetzt wird.

9. Verfahren nach einem der Ansprüche 1 bis 7, **dadurch gekennzeichnet, dass** als Vorrichtung (10) eine Conche verwendet wird.

10. Verfahren nach einem den Ansprüche 8 oder 9, **dadurch gekennzeichnet, dass** die Vorrichtung (10) und das Mahlaggregat (12) mit Stahl oder mit einem keramischen Werkstoff ausgekleidet werden.

11. Verfahren nach einem der Ansprüche 1 bis 7, **dadurch gekennzeichnet, dass** als Pumpe (22) eine Verdrängerpumpe, vorzugsweise eine Exzenterschneckenpumpe eingesetzt wird.

12. Verfahren nach Anspruch 11, **dadurch gekennzeichnet, dass** die Pumpe (22) temperierbar ist.

## Claims

1. A process for the production of semi-luxury foods based on fat masses containing the following steps:
a. feeding the raw materials into an apparatus (10),
b. mixing the raw materials in the apparatus (10) and setting the required processing temperature and consistency,
c. liquefying the mixed raw materials in the apparatus (10) by adding at least one fat and/or at least one oil,
d. fine-grinding the fat mass produced through circulation between the apparatus (10) and a grinding mill (12),
wherein
• one or more additives are added after liquefaction of the mixed raw materials,
• the air required in the process is introduced into the fat mass via a mixing shaft (18),
• exhaust air is discharged from the apparatus (10) through a suction (20) in an accelerated way,
• the fat mass is circulated between the apparatus (10) and the grinding mill (12) by means of a pump (22), and
• the fat mass is tempered during pumping by means of the pump (22).

2. The process as recited in claim 1 wherein the raw materials are dry conched in the apparatus in an intermediate step prior to liquefaction.

3. The process as recited in one of the claims 1 or 2 **characterized in that** the fat mass is ground in the grinding mill (12) in two steps.

4. The process as recited in claim 3 **characterized in that** the fat mass first flows through a pre-grinding zone (14) of the grinding mill (12) and is subsequently finely ground in the main grinding zone (16) of the grinding mill (12).

5. The process as recited in claim 4 **characterized in that** a separate machine is used each for pre-grinding and for fine-grinding, with both machines being arranged after the apparatus (10).

6. The process as recited in one of the claims 1 to 5 **characterized in that** assistive means made of steel and/or ceramic are used in the grinding mill (12).

7. The process as recited in claim 6 **characterized in that** a component (24) is arranged after the grinding mill (12) by means of which possibly broken or rubbed off steel and/or ceramic assistive means are removed from the production cycle.

8. The process as recited in one of the claims 1 to 7 **characterized in that** an agitator bead mill is used as grinding mill (12).

9. The process as recited in one of the claims 1 to 7 **characterized in that** a conche is used as apparatus (10).

10. The process as recited in one of the claims 8 or 9 **characterized in that** the apparatus (10) and the grinding mill (12) are lined with steel or with a ceramic material.

11. The process as recited in one of the claims 1 to 7 **characterized in that** a positive displacement pump, preferably a progressing cavity pump, is used as pump (22).

12. The process as recited in claim 11 **characterized in that** the pump (22) can be tempered.

## Revendications

1. Procédé de production de produits d'agrément à base de masses grasses, comprenant les étapes suivantes consistant à:
a. charger les matières premières dans un dispositif (10);
b. mélanger les matières premières dans le dispositif (10) et à régler la température de traitement et la consistance de traitement requises;
c. liquéfier les matières premières mélangées dans le dispositif (10) en ajoutant au moins une graisse et/ou au moins une huile;
d. broyer finement la masse grasse résultante par un mode de circulation entre le dispositif (10) et une unité de broyage (12),
dans lequel:
• un ou plusieurs additifs sont ajoutés après avoir liquéfié les matières premières mélangées,
• l'air requis dans le procédé est introduit dans la masse grasse par un arbre mélangeur (18),
• de l'air d'évacuation est évacué de manière accélérée du dispositif (10) par un dispositif d'aspiration (20),
• la masse grasse est transportée, au moyen d'une pompe (22), en circuit entre le dispositif (10) et l'unité de broyage (12), et
• la masse grasse est tempérée au moyen de la pompe (22) durant le pompage.

2. Procédé selon la revendication 1, dans lequel les matières premières sont conchées à sec à l'intérieur du dispositif, dans une étape intermédiaire, encore avant la liquéfaction.

3. Procédé selon l'une quelconque des revendications 1 ou 2, **caractérisé par le fait que** la masse grasse est broyée en deux étapes à l'intérieur de l'unité de broyage (12).

4. Procédé selon la revendication 3, **caractérisé par le fait que** la masse grasse passe d'abord à travers un pré-broyage (14) de l'unité de broyage (12) et est ensuite broyée finement dans la chambre principale de broyage (16) de l'unité de broyage (12).

5. Procédé selon la revendication 4, **caractérisé par le fait que** l'on utilise respectivement une machine séparée pour le pré-broyage et le broyage fin, dans lequel les deux machines sont disposées en aval du dispositif (10).

6. Procédé selon l'une quelconque des revendications 1 à 5, **caractérisé par le fait que** des aides de broyage en acier et/ou en céramique sont utilisées dans l'unité de broyage (12).

7. Procédé selon la revendication 6, **caractérisé par le fait qu'**un composant (24) est disposé en aval de l'unité de broyage (12), au moyen duquel des débris possibles de rupture et/ou d'abrasion des aides de broyage en acier et/ou en céramique sont éliminés du cycle de production.

8. Procédé selon l'une quelconque des revendications 1 à 7, **caractérisé par le fait que** l'on utilise un broyeur-agitateur à boulets en tant qu'unité de broyage (12).

9. Procédé selon l'une quelconque des revendications 1 à 7, **caractérisé par le fait que** l'on utilise une conche en tant que dispositif (10).

10. Procédé selon l'une quelconque des revendications 8 ou 9, **caractérisé par le fait que** le dispositif (10) et l'unité de broyage (12) sont revêtus d'acier ou d'un matériau céramique.

11. Procédé selon l'une quelconque des revendications 1 à 7, **caractérisé par le fait que** l'on utilise en tant que pompe (22) une pompe volumétrique, de préférence une pompe à vis excentrique.

12. Procédé selon la revendication 11, **caractérisé par le fait que** la pompe (22) peut être tempérée.
